# EUROPEAN PATENT SPECIFICATION

(11) **EP 1 492 131 B1**
(45) Date of publication and mention of the grant of the patent: **14.03.2012**
(21) Application number: 02803119.3
(22) Date of filing: 14.11.2002
(51) Int. Cl.: H01C 7/02, G01K 7/22, H01C 1/14

(54) **POLYMER PTC THERMISTOR AND TEMPERATURE SENSOR**
POLYMER-PTC-THERMISTOR UND TEMPERATURSENSOR
THERMISTANCE CTP POLYMERE ET CAPTEUR THERMIQUE

(30) Priority: 15.11.2001 JP 2001350737
(43) Date of publication of application: 29.12.2004
(73) Proprietor: Tyco Electronics Raychem Kabushiki Kaisha, Kawasaki-City (JP)
(72) Inventor: KOYAMA, Hiroyuki c/o Tyco El. Raychem K.K., Inashiki-gun, Ibaraki 300-0626 (JP)
(74) Representative: Watterson, Peer Marten John
(86) International application number: PCT/JP2002/011889
(87) International publication number: WO 2003/043032

(56) References cited:
- EP-A- 0 758 131
- EP-A- 1 020 877
- EP-A- 1 139 352
- JP-A- 2000 311 801
- JP-A- 2001 052 901
- US-A- 5 351 026

## Description

### Technical Field

The present invention relates to a polymer PTC thermistor and to a temperature sensor using the same.

### Background Art

A polymer PTC thermistor is a device which interrupts the passage of current by using a positive resistance temperature characteristic, that is, a PTC (Positive Temperature Coefficient) of a conductive polymer which is varied in conductivity due to thermal expansion.

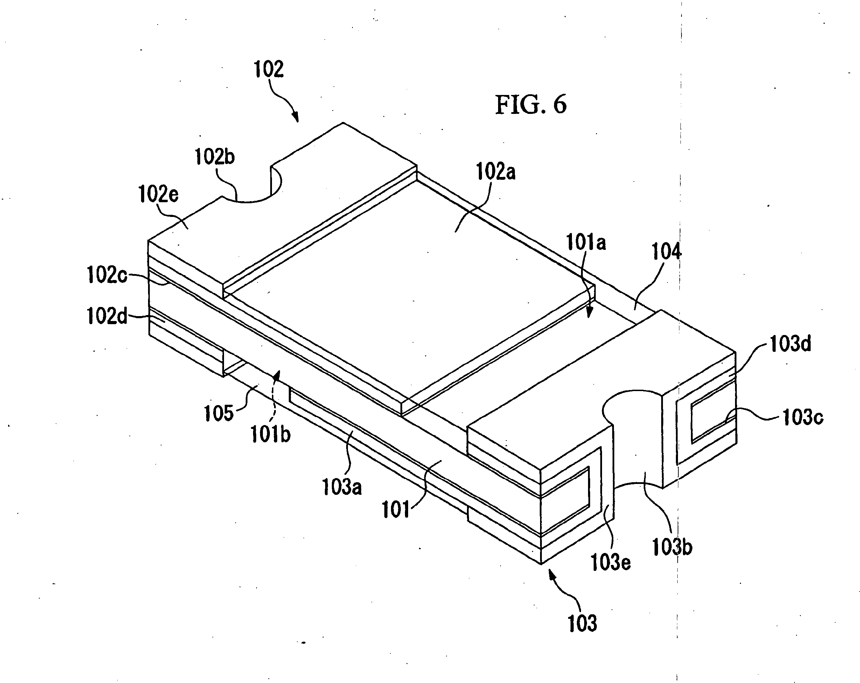

Referring to Figure 6, an example of the polymer PTC thermistor will be described below. Figure 6 is a perspective view showing a conventional polymer PTC thermistor. In Figure 6, reference numeral 101 denotes a conductive polymer, reference numerals 102 and 103 denote electrodes joined to the conductive polymer 101, and reference numerals 104 and 105 denote nonconductive resin films for covering the electrodes 102 and 103, which are provided between the conductive polymer and the resin films 104 and 105.

The conductive polymer 101 is rectangular in plan view and is shaped like a plate with a uniform thickness. For example, the conductive polymer 101 is a polymer resin body which is obtained by kneading polyethylene and carbon black and then forming crosslinkages by using radiation. In the conductive polymer 101, carbon black particles are linked to one another at room temperature and thus form a number of conductive paths through which current flows, thereby exhibiting excellent conductivity. However, when the conductive polymer 101 thermally expands due to a rise in ambient temperature around the conductive polymer 101 and excessive current passing through the conductive paths, a distance between the carbon black particles is increased so as to cut off the conductive paths, thereby sharply reducing conductivity (resistance increases).

The electrodes 102 and 103 are provided respectively on both ends of the longitudinal direction of the plate-like conductive polymer 101. The electrode 102 is constituted of a copper electrode strip 102a provided along a side 101a of the conductive polymer 101, a base 102b which is connected to the electrode strip 102a and is provided on one end-of the conductive polymer 101, and a nickel foil 102c disposed between the conductive polymer 101 and the electrode strip 102a.

The electrode 103 is similar in structure to the electrode 102. The electrode 103 is constituted of a copper electrode strip 103a provided along the other side 101 b of the conductive polymer 101, a base 103b which is connected to the electrode strip 103a and is provided on the other end of the conductive polymer 101, and nickel foil 103c disposed between the conductive polymer 101 and the electrode strip 103a.

The electrode strip 102a has the same width as the conductive polymer 101 and has one end formed into a rectangle. The electrode strip 102a is formed with a gap which is in parallel with the electrode 103 (electrode strip 103d described later) on the opposite side. The base 102b is formed by integrating the electrode strip 102a and a copper electrode strip 102d, which partially remains on the other side 101b, with a solder coating layer 102e.

The electrode strip 103a has the same width as the conductive polymer 101 and has one end formed into a rectangle. The electrode strip 103a is formed with a gap which is in parallel with the electrode 102 (the above electrode strip 102d) on the opposite side. The base 103b is formed by integrating the electrode strip 103a and a copper electrode strip 103d, which partially remains on the side 101 a, with a solder coating layer 103e.

The resin film 104 is formed so as to cover the electrode strip 102a except for the base 102b and the electrode strip 102d on the side 101 a of the conductive polymer 101. The resin film 105 is also formed so as to cover the electrode strip 103a except for the base 103b and the electrode strip 103d on the side 101b of the conductive polymer 101.

By using the PTC characteristic of the conductive polymer 101, the polymer PTC thermistor thus configured can be caused to act as a switch using the ambient temperature of the conductive polymer 101as a trigger. When the ambient temperature is lower than a predetermined temperature (temperature at which the conductive polymer thermally expands), current is applied. When the ambient temperature is equal to or higher than the predetermined temperature, the conductive polymer 101 thermally expands and interrupts the current.

The polymer PTC thermistor can be caused to act as a switch using as a trigger the magnitude of current flowing between the electrodes 102 and 103. When overcurrent occurs between the electrodes 102 and 103, the conductive polymer 101 thermally expands and interrupts current due to self-heating caused by Joule heat. When excessive current is eliminated, the PTC thermistor returns to a state enabling the passage of current.

In the polymer PTC thermistor, the electrode strip 102a is overlaid on one side of the conductive polymer 101 and thus the side edges of the electrode strip 102a and the nickel foil 102c are exposed from the side edges of the longitudinal direction of the conductive polymer 101. Similarly the electrode strip 103a is overlaid on the other side of the conductive polymer 101 and thus the side edges of the electrode strip 103a and the nickel foil 103c are exposed from the side edges of the longitudinal direction of the conductive polymer 101.

Incidentally the side edges of the electrode strips 102a and 103a and the nickel foils 102c and 103c are exposed to the air all the time and thus are susceptible to moisture in the air. Thus, oxidation gradually occurs over time. Such oxidation considerably develops particularly between the conductive polymer 101 and the nickel foils 102c and 103c and becomes a factor causing a poor contact and interrupting the passage of current, thereby affecting the performance of the polymer PTC thermistor. Hence, oxidation is a serious problem. In addition, the need for miniaturization of polymer PTC thermistors has increased in recent years (e.g., the size of the conductive polymer 101 is long side x short side x thickness; 1.60 mm x 0.80 mm x 0.62 mm or less). The smaller the polymer PTC thermistor, the more the contact surface between a conductive polymer and an electrode strip decreases. Hence, even slight oxidation is likely to cause poor contact.

Further, the side edges of the electrode strips 102a and 103a are exposed in the above polymer PTC thermistor. Thus, for example when the polymer PTC thermistor is soldered onto a circuit board of electrical equipment, a residue of solder may adhere over the electrode strips 102a and 103a, cause a short circuit, and interfere with the switching function. Hence, such a configuration causes a problem.

EP-A-1020877 may be mentioned. It discloses a polymer PTC thermistor comprising a conductive polymer having a PTC characteristics and an electrode joined to the conductive polymer wherein the electrode is coated by a protective coating resin layer.

### Disclosure of the Invention

In order to solve the above problems, the following means are adopted.

The present invention relates to a polymer PTC thermistor comprising: a conductive polymer (1) having PTC characteristics and having a side (1a) and two electrodes (12a, 13a) jointed to the conductive polymer, characterized in that the two electrodes are separately provided on said side (1a) of the conductive polymer and are separated from the edge of the side, and a resin film covers the side so as to wrap the electrodes.

In the present invention, an electrode is disposed along the side having the conductive polymer and is separated from the edge of the side and the resin film is formed which covers the side so as to wrap the electrode, so that the electrode is separated from a boundary of the conductive polymer and the resin film, the boundary being susceptible to oxidation first, and the electrode is covered with the resin film on the conductive polymer. Thus, water does not enter between the conductive polymer and the electrode and oxidation is prevented on the electrode. Further, a corrosion-resistant region is formed in which the conductive polymer and the resin film are overlaid to prevent the entry of water around the electrode. This configuration also prevents oxidation on the electrode.

In the present invention, it is desirable to form a conductive polymer into a plate, dispose electrodes respectively on the two sides of the conductive polymer, and form resin films which respectively cover the two sides so as to wrap the electrodes. With this configuration, the electrodes can be readily attached to the conductive polymer and the resin films covering the electrodes can be readily formed, thereby improving productivity in the manufacturing of the polymer PTC thermistor.

In the present invention, two electrodes are separately provided on one side of the conductive polymer and a resin film is formed which covers the side so as to wrap the two electrodes. Also with this configuration, the electrodes can be readily attached to the conductive polymer and the resin film covering the electrodes can be readily formed, thereby improving productivity in the manufacturing of the polymer PTC thermistor.

The polymer PTC thermistor having the above characteristics can be used as a temperature sensor element because of a switching function using an ambient temperature as a trigger. The polymer PTC thermistor is particularly suitable for a temperature sensor.

The thermal expansion temperature, that is, a temperature at which the conductive paths are interrupted, can be arbitrarily set by changing the composition of the conductive polymer or adjusting the amount of carbon black. Thus, by setting the thermal expansion temperature of the conductive polymer at a certain value, it is decided that the temperature of an object is lower than the certain value when current passes through the two electrodes and it is decided that the temperature exceeds the certain value when the current is interrupted. In this way, by using the polymer PTC thermistor of the present invention as a temperature sensor element, it is possible to clearly measure a temperature while narrowing a target temperature range.

For example, the polymer PTC thermistor is mounted on the circuit board of each kind of electrical equipment, the polymer PTC thermistor of the present invention having the conductive polymer whose thermal expansion temperature is set in consideration of an upper limit temperature permitting normal operations of the circuit board. Thus, the circuit is interrupted in the event of abnormal heat on the board, thereby protecting the electrical equipment.

### Brief Description of the Drawings

Figure 1 is a diagram showing a polymer PTC thermistor according to Embodiment 1 , Figure 1A is a plan view showing the polymer PTC thermistor, Figure 1B is a back view, Figure 1C is a front view, Figure 1D is a rear view, Figure 1E is a left side view, and Figure 1F is a right side view;
Figure 2 is a perspective view showing the polymer PTC thermistor of Embodiment 1;
Figure 3 is a diagram showing the manufacturing process of the polymer PTC thermistor of Embodiment 1 in stages;
Figure 4 is a diagram showing a polymer PTC thermistor according to Embodiment 2 which is an embodiment of the present invention, Figure 4A is a plan view showing the polymer PTC thermistor, Figure 4B is a back view, Figure 4C is a front view, Figure 4D is a rear view, Figure 4E is a left side view, and Figure 4F is a right side view;
Figure 5 is a diagram showing a polymer PTC thermistor according to Embodiment 3 of the present invention, Figure 5A is a plan view showing the polymer PTC thermistor, Figure 5B is a back view, Figure 5C is a front view, Figure 5D is a rear view, Figure 5E is a left side view, and Figure 5F is a right side view; and
Figure 6 is a perspective view showing a conventional polymer PTC thermistor.

### Best Mode for Carrying Out the Invention

### [Embodiment 1]

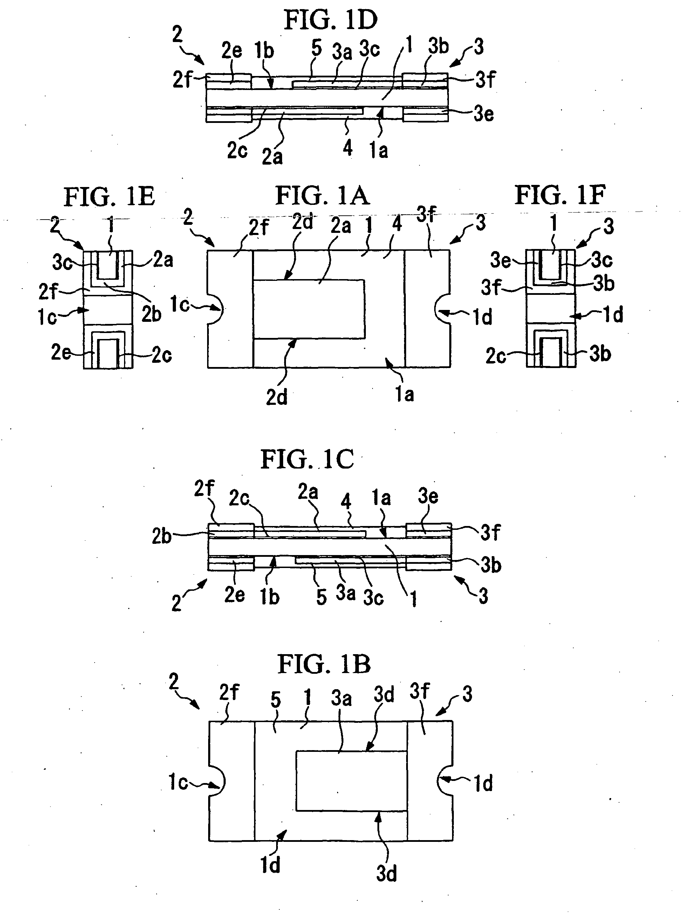

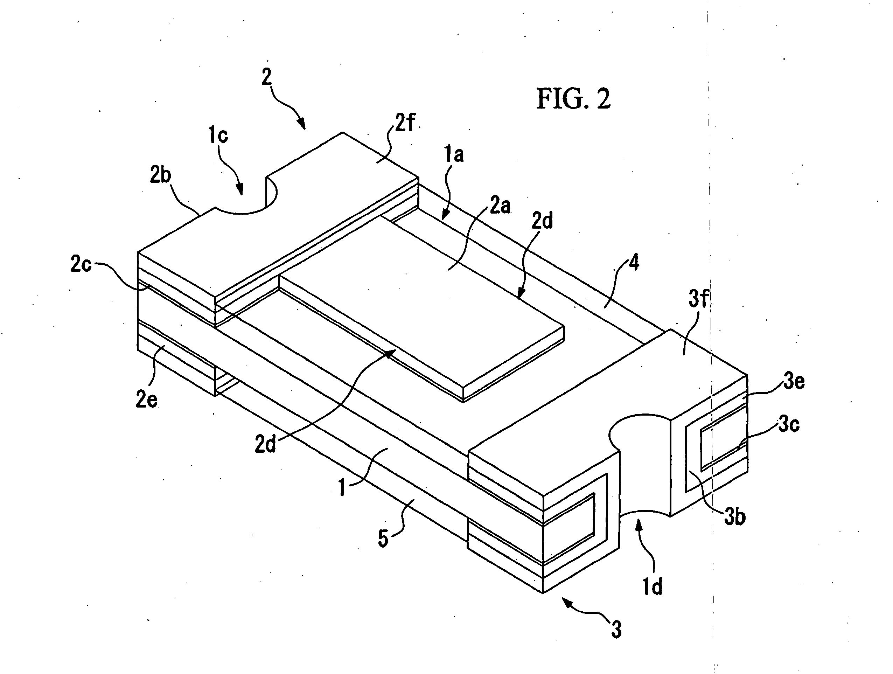

Referring to Figures 1 to 3, Embodiment 1 which is not an embodiment of the present invention but is useful for its understanding will be described below. Figure 1A is a plan view showing a polymer PTC thermistor according to the present embodiment. Figure 1B is a back view, Figure 1C is a front view, Figure 1D is a rear view, Figure 1E is a left side view, and Figure 1F is a right side view. Figure 2 is a perspective view showing the polymer PTC thermistor according to the present embodiment.

The polymer PTC thermistor is used, for various kinds of electrical equipment, as a temperature sensor element aimed at protecting an overheated circuit board. In the drawings, reference numeral I denotes a conductive polymer, reference numerals 2 and 3 denote electrodes joined to the conductive polymer 1, and reference numerals 4 and 5 denote nonconductive resin films for covering the electrodes 2 and 3, which are provided between the conductive polymer and the resin films 4 and 5.

The conductive polymer 1 is rectangular in plan view and is shaped like a plate (long side × short side × thickness; 1.60 mm × 0.80 mm × 0.62 mm) with an even thickness. For example, the conductive polymer 1 is a polymer resin body which is obtained by kneading polyethylene and carbon black and then forming a cross-link by using radiation. In the conductive polymer 1, carbon black particles are linked to one another at room temperature and thus form a number of conductive paths through which current flows, thereby exhibiting excellent conductivity. However, when the conductive polymer 1 thermally expands due to a rise in the ambient temperature around the conductive polymer 1 and excessive current passing through the conductive paths, a distance between the carbon black particles is increased so as to cut off the conductive paths, thereby sharply reducing conductivity (resistance increases).

The electrodes 2 and 3 are provided respectively on both ends of the longitudinal direction of the conductive polymer 1. The electrode 2 is constituted of a copper electrode strip 2a provided along a side 1a of the conductive polymer 1, a base 2b which is connected to the electrode strip 2a and is provided on one end of the conductive polymer 1, and a nickel foil 2c disposed between the conductive polymer 1 and the electrode strip 2a.

The electrode 3 is similar in structure to the electrode 2. The electrode 3 is constituted of a copper electrode strip 3a provided along the other side 1b of the conductive polymer 1, a base 3b which is connected to the electrode strip 3a and is provided on the other end of the conductive polymer 1, and nickel foil 3c disposed between the conductive polymer 1 and the electrode strip 3a.

The electrode strip 2a is shaped like a rectangle (length × width; 0.73 mm × 0.40 mm) with a thickness of 20 to 30 µm except for the base. The electrode strip 2a has the long side along the length of the conductive polymer 1 but is smaller in width than the conductive polymer 1. Two side edges 2d along the longitudinal direction of the electrode strip 2a are disposed at a distance of about 0.20 mm from the side edges of the conductive polymer 1. Further, the end of the electrode strip 2a is formed into a rectangle disposed at a distance of about 0.27 mm from the electrode 3 (electrode strip 3e described later) on the opposite side.

The base 2b is formed by integrating the base end of the electrode strip 2a and a copper electrode strip 2e, which partially remains on the other side 1b of the conductive polymer 1, along a concave portion 1c formed on one end of the conductive polymer 1. A solder coating layer 2f is formed on a surface of the base 2b. The coating layer 2f is about 20 to 35 µm in thickness.

The electrode strip 3a is also formed like a rectangle having the same shape and dimensions as the electrode strip 2a. The electrode strip 3a has the long side along the length of the conductive polymer 1 but is smaller in width than the conductive polymer 1. Two side edges 3d along the longitudinal direction of the electrode strip 3a are disposed at a distance of about 0.20 mm from the side edges of the conductive polymer 1. Further, the end of the electrode strip 3a is formed into a rectangle disposed at a distance of about 0.27 mm from the electrode 2 (the electrode strip 2e) on the opposite side.

The base 3b is formed by integrating the base end of the electrode strip 3a and a copper electrode strip 3e, which partially remains on the side 1a of the conductive polymer 1, along a concave portion 1d formed on the other end of the conductive polymer 1. A solder coating layer 3f is formed on a surface of the base 3b. The coating layer 3f is about 20 to 35 µm in thickness.

The resin film 4 is formed so as to entirely cover the electrode strip 2a except for the base 2b and the electrode strip 2e on the side 1a of the conductive polymer 1 and the resin film 4 is about 10 to 15 µm in thickness. The resin film 5 is also formed so as to entirely cover the electrode strip 3a except for the base 3b and the electrode strip 3e on the other side 1b of the conductive polymer 1 and the resin film 5 is about 10 to 15 µm in thickness.

The polymer PTC thermistor thus configured uses the PTC characteristic of the conductive polymer 1 and acts as a switch using ambient temperature as the trigger. The thermal expansion temperature, that is, a temperature interrupting the conductive paths, can be arbitrarily set by changing the composition of the conductive polymer 1 or adjusting the amount of carbon black. Thus, when it is necessary to know whether or not the temperature of an object exceeds a certain value, the composition of the conductive polymer 1 is changed or the amount of carbon black is adjusted to set the thermal expansion temperature of the conductive polymer 1 at the certain value. When current is applied between the electrodes 2 and 3, it is decided that the temperature of the object is lower than the certain value. When the current is interrupted, it is decided that the temperature exceeds the certain value. In this way, the polymer PTC thermistor is used as a temperature sensor element.

Additionally for example, a polymer PTC thermistor is mounted on the circuit board of each kind of electrical equipment, the polymer PTC thermistor having the conductive polymer 1 whose thermal expansion temperature is set in consideration of an upper limit temperature permitting normal operations of the circuit board. Thus, the circuit is interrupted in the event of abnormal heat on the board, thereby protecting the electrical equipment.

In either case, the way to activate the thermistor is similar to that of a conventional polymer PTC thermistor, and thus the explanation thereof is omitted.

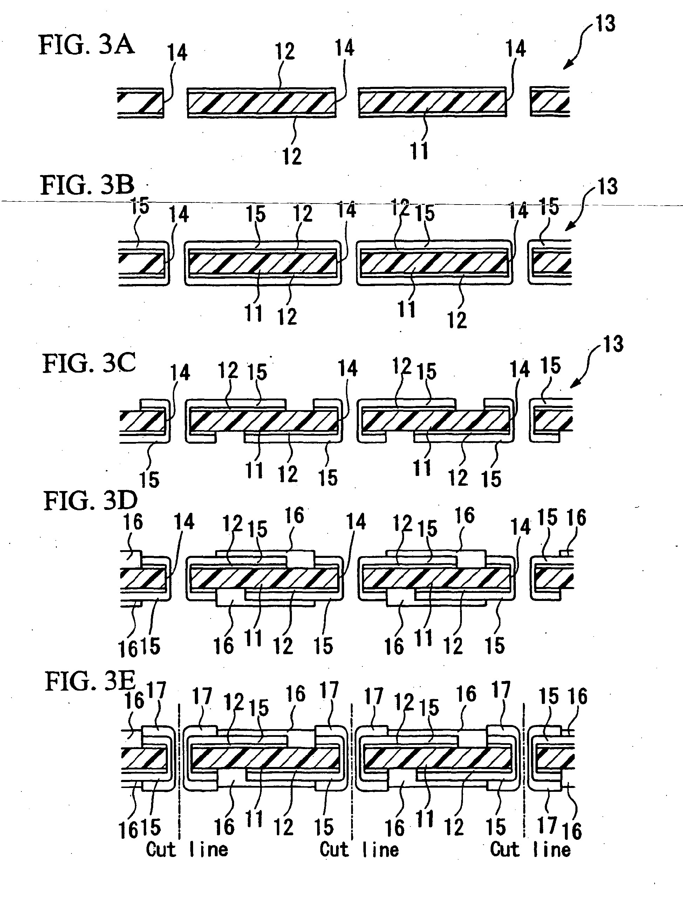

Referring to Figure 3, the manufacturing steps of the polymer PTC thermistor will be described below. Figures 3A to 3E are sectional views showing the states of the polymer PTC thermistor in the manufacturing steps.

First, as shown in Figure 3A, a work 13 is prepared in which nickel foils 12 are attached by pressure to both sides of a raw plate 11 of a conductive polymer having an even thickness. This part acts as the conductive polymer 1 of the polymer PTC thermistor at some other time.

A plurality of lines of through holes 14 with equal pitches are formed at regular intervals on the work 13. The respective parts of the polymer PTC thermistor are formed between the adjacent lines of the through holes 14. Final products are made by cutting the work 13. Besides, the through holes 14 in the adjacent lines act as the concave portions 1c and 1d.

As shown in Figure 3B, a copper plating layer 15 is formed over both sides of the work 13 and the inner surfaces of the through holes 14. This part acts as the electrodes 2 and 3.

As shown in Figure 3C, etching is performed on predetermined portions on both sides of the work 13 to remove the copper plating layer 15 and the nickel foil 12, and the surface of the raw plate 11 of the conductive polymer is exposed from the etched portions. These portions act as gaps between the electrode strips 2a and 3e.

As shown in Figure 3D, a resin layer 16 is formed so as to cover a predetermined portion on the copper plating layer 15 and the portion where the raw plate 11 of the conductive polymer is exposed. This portion acts as the resin films 4 and 5.

As shown in Figure 3E, the resin layer 16 is used instead of a mask and a solder plating layer 17 is formed on the other portions (including the inner surfaces of the hole 14). This portion acts as the solder coating layers 2f and 3f.
Thereafter the work 13 is cut along the lines of the through holes 14 and is further cut in parallel with the paper face of Figure 3, so that the polymer PTC thermistors are obtained as final products.

In the polymer PTC thermistor thus configured, for example, the side edge 2d of the electrode strip 2a is separated from the side edge of the conductive polymer 1 while the electrode strip 2a is formed along the side 1a of the conductive polymer 1, and the side 1 a is covered with the resin film 4 together with the electrode strip 2a, so that the electrode strip 2a is separated from the boundary of the conductive polymer 1 and resin film 4, the boundary being susceptible to oxidation first, and the electrode strip 2a is entirely covered with the resin film 4 and is not exposed to the air. Thus, it is possible to prevent oxidation on the electrode strip 2a. Further, a corrosion-resistant region is formed in which the conductive polymer 1 and the resin film 4 are overlaid to prevent the entry of water around the electrode strip 2a. This configuration also prevents oxidation on the electrode strip 2a. This effect can be similarly anticipated on the electrode strip 3a.

Moreover, in the polymer PTC thermistor thus manufactured, the two electrode strips 2a and 3a are respectively disposed on both sides of the conductive polymer 1 shaped like a plate. Thus, the electrodes 2 and 3 can be readily attached to the conductive polymer 1 and the resin films 4 and 5 covering the electrode strips 2a and 3a can be readily formed, thereby improving productivity.

Additionally, the resin films 4 and 5 are formed so as to entirely cover the electrode strips 2a and 3a in the present embodiment. Considering the prevention of oxidation developing between the conductive polymer 1 and the electrode strips 2a and 3a, the following configuration is also applicable: the resin films cover at least a region which includes the boundary of the conductive polymer 1 and the electrode strip 2a and is exposed to the outside and a region which includes the boundary of the conductive polymer 1 and the electrode strip 3a and is exposed to the outside.

### [Embodiment 2]

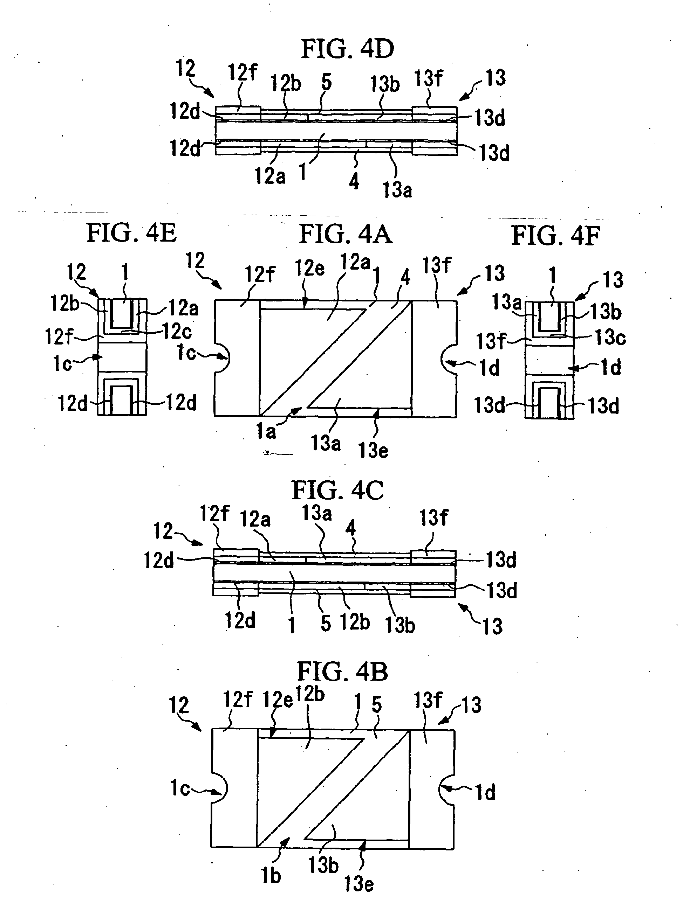

Referring to Figure 4, Embodiment 2 of the present invention will be described below. Figure 4A is a plan view showing a polymer PTC thermistor according to the present embodiment. Figure 4B is a back view, Figure 4C is a front view, Figure 4D is a rear view, Figure 4E is a left side view, and Figure 4F is a right side view. The constituent elements described in Embodiment 1 are indicated by the same reference numerals and the explanation thereof is omitted.

The present embodiment is different from Embodiment 1 in the configurations of electrodes 12 and 13. The electrode 12 is constituted of a copper electrode strip 12a provided along a side 1 a of a conductive polymer 1, a copper electrode strip 12b provided along the other side 1b, a base 12c provided over the electrode strips 12a and 12b on one end of the conductive polymer 1, and nickel foils 12d respectively disposed between the conductive polymer 1 and the electrode strips 12a and 12b.

The electrode 13 is similar in structure to the electrode 12. The electrode 13 is constituted of a copper electrode strip 13a provided along a side 1a of the conductive polymer 1, a copper electrode strip 13b provided along the other side 1b, a base 13c provided over the electrode strips 13a and 13b on the other end of the conductive polymer 1, and nickel foils 13d disposed respectively between the conductive polymer 1 and the electrode strips 13a and 13b.

The electrode strip 12a is shaped like a tongue which is a right triangle having a diagonally cut end (length; 0.73 mm). A side edge 12e is caused to agree with the longitudinal direction of the conductive polymer 1 and is disposed at a distance of about 0.10 mm from the side edge of the conductive polymer 1.

The electrode strip 13a is also shaped like a tongue which is a right triangle having a diagonally cut end with the same shape and dimensions as the electrode strip 12a. A side edge 13e adjacent to a hypotenuse is caused to agree with the longitudinal direction of the conductive polymer 1 and is disposed at a distance of about 0.10 mm from the side edge of the conductive polymer 1. The electrode strips 12a and 13a are disposed at a distance of about 0.27 mm from each other with the hypotenuses facing each other in parallel on the side 1a of the conductive polymer 1. The distance is to be set larger than the thickness of the conductive polymer 11.

The electrode strips 12b and 13b are arranged on the other side 1b of the conductive polymer 1 in the same manner as the electrode strips 12a and 13a. The side edges 12e and 13e adjacent to hypotenuses are caused to agree with the longitudinal direction of the conductive polymer 1 and are disposed at a distance of about 0.10 mm from the side edges of the conductive polymer 1. Further, the hypotenuses on the ends are faced to each other in parallel and are disposed at a distance of about 0.27 mm from each other.

The base 12c is formed by integrating the electrode strips 12a and 12b along a concave portion 1c. A solder coating layer 12f is formed on a surface of the base 12c. The base 13c is formed by integrating the electrode strips 13a and 13b along a concave portion 1d in the same manner as the base 12c. A solder coating layer 13f is formed on a surface of the base 13c. The coating layers 12f and 13f are about 20 to 35 µm in thickness.

The resin film 4 is formed so as to entirely cover the electrode strips 12a and 13a except for the bases 12c and 13c on the side 1 a of the conductive polymer 1. The resin film 5 is formed so as to entirely cover the electrode strips 12b and 13b except for the bases 12c and 13c on the other side 1b of the conductive polymer 1.

As with Embodiment 1, the polymer PTC thermistor configured thus has a switching function using ambient temperature as the trigger and a switching function using as the trigger the magnitude of current flowing between the electrodes 12 and 13. The thermistor is activated in a similar manner and thus the explanation thereof is omitted. Further, the manufacturing steps of the polymer PTC thermistor are similar to those of Embodiment 1 and thus the explanation thereof is also omitted.

In the polymer PTC thermistor thus configured, for example, the side edge 12e of the electrode strip 12a is separated from the side edge of the conductive polymer 11 while the electrode strip 12a is formed along the side 1a of the conductive polymer 11, and the side 1a is covered with the resin film 4 together with the electrode strip 12a, so that the electrode strip 12a is separated from the boundary of the conductive polymer 1 and resin film 4, the boundary being susceptible to oxidation first, and the electrode strip 12a is entirely covered with the resin film 4 and is not exposed to the air. Thus, it is possible to prevent oxidation on the electrode strip 12a. Further, a corrosion-resistant region is formed in which the conductive polymer 1 and the resin film 4 are overlaid to prevent the entry of water around the electrode strip 12a. This configuration also prevents oxidation on the electrode strip 12a. This effect can be similarly expected on the electrode strips 12b, 13a, and 13b.

### [Embodiment 3]

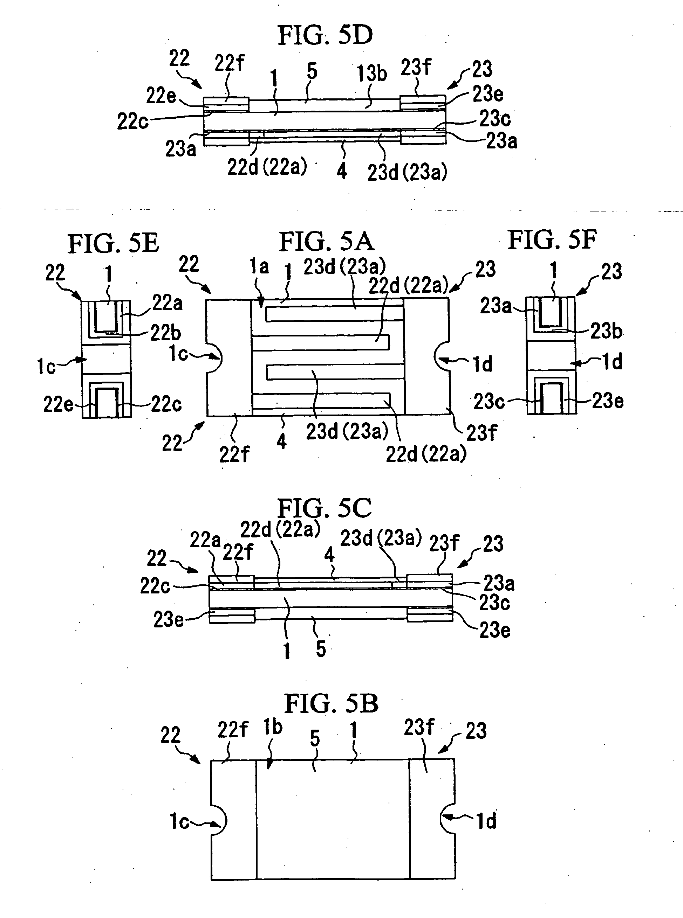

Referring to Figure 5, Embodiment 3 of the present invention will be described below. Figure 5A is a plan view showing a polymer PTC thermistor according to the present embodiment. Figure 5B is a back view, Figure 5C is a front view, Figure 5D is a rear view, Figure 5E is a left side view, and Figure 5F is a right side view. The constituent elements described in the above embodiments are indicated by the same reference numerals and the explanation thereof is omitted.

The present embodiment is different from the above embodiments in the configurations of electrodes 22 and 23. The electrode 22 is constituted of a copper electrode strip 22a provided along a side 1a of a conductive polymer 1, a base 22b which is connected to the electrode strip 22a and is provided on one end of the conductive polymer 1, and a nickel foil 22c disposed between the conductive polymer 1 and the electrode strip 22a.

The electrode 23 is similar in structure to the electrode 22. The electrode 23 is constituted of a copper electrode strip 23a provided along the side 1a of the conductive polymer 1, a base 23b which is connected to the electrode strip 23a and is provided on the other end of the conductive polymer 1, and a nickel foil 23c disposed between the conductive polymer 1 and the electrode strip 23a. Constituent elements corresponding to the electrode strips 22a and 23a are not provided on the other side 1b of the conductive polymer 1.

The electrode strip 22a is shaped like a plow whose teeth 22d are about 0.90 mm in length and about 0.10 mm in width. An interval between the adjacent teeth is about 0.30 mm. The longitudinal direction of the tooth 22d is caused to agree with that of the conductive polymer 1. The electrode strip 23a is also shaped like a plow with the same shape and dimensions as the electrode strip 22a. The longitudinal direction of a tooth 23d is caused to agree with that of the conductive polymer 1. The teeth of the electrode strips 22a and 23a are alternately combined so as to face each other. The alternately combined teeth 22d and 23d are disposed at a distance of about 0.10 mm. The teeth 22d and 23d arranged on the outer side of the width direction of the conductive polymer 1 are respectively disposed at a distance of about 0.05 mm from the side edges of the conductive polymer 1.

The base 22b is formed by integrating the base end of the electrode strip 22a and a copper electrode strip 22e, which partially remains on the other side 1b of the conductive polymer 1, along a concave portion 1c. A solder coating layer 22f is formed on a surface of the base 22b. The base 23b is also formed by integrating the base end of the electrode strip 23a a copper electrode strip 23e, which partially remains on the other side 1b, along the concave portion 1c in the same manner as the base 22b. A solder coating layer 23f is formed on a surface of the base 23b. The coating layers 22f and 23f are about 20 to 35 µm in thickness.

The resin film 4 is formed so as to entirely cover the electrode strips 22a and 23a except for the bases 22b and 23b on the side 1a of the conductive polymer 1. The resin film 5 is formed so as to entirely cover the other side 1b of the conductive polymer 1 except for the electrode strips 22e and 23e.

As with above embodiments, the polymer PTC thermistor configured thus has a switching function using ambient temperature as the trigger and a switching function using as a trigger the magnitude of current flowing between the electrodes 22 and 23. The thermistor is activated in a similar manner and thus the explanation thereof is omitted. Further, the manufacturing steps of the polymer PTC thermistor are similar to those of Embodiment 1 and thus the explanation thereof is also omitted.

In the polymer PTC thermistor thus configured, the electrode strips 22a and 23a shaped like plows are arranged so that the teeth 22d and 23d are alternately combined and are separated from the side edges of the conductive polymer 1. Further, the side 1a is covered with the resin film 4 together with the electrode strips 22a and 23a, so that the electrode strips 22a and 23a are separated from the boundary of the conductive polymer 1 and resin film 4, the boundary being susceptible to oxidation first, and the electrode strips 22a and 23a are entirely covered with the resin film 4 and are not exposed to the air. Thus, it is possible to prevent oxidation on the electrode strips 22a and 23a. Further, a corrosion-resistant region is formed in which the conductive polymer 1 and the resin film 4 are overlaid to prevent the entry of water around the electrode strips 22a and 23a which are combined with each other. This configuration also prevents oxidation on the electrode strips 22a and 23a.

Moreover, in the polymer PTC thermistor thus manufactured, the electrodes 22 and 23 can be readily attached to the conductive polymer 1 and the resin film 4 covering the electrode strips 22a and 23a can be readily formed, thereby improving productivity in the manufacturing of the polymer PTC thermistor.

Each of the embodiments described the example using the polymer PTC thermistor as a temperature sensor element aimed at protecting an overheated circuit board. The polymer PTC thermistor of the present invention can also be caused to act as a switch using as the trigger the magnitude of current flowing between the electrodes 2 and 3. In this application, the polymer PTC thermistor is used as an overcurrent protection device aimed at preventing overcharging in a secondary battery such as a lithium-ion secondary battery, a nickel metal hydride secondary battery, and a nicad secondary battery.

### Industrial Applicability

According to the polymer PTC thermistor of the present invention, an electrode is disposed along one side of a conductive polymer so as to be separated from the edge of the side, and a resin film is formed which covers the side so as to wrap the electrode, so that the electrode is separated from the boundary of the conductive polymer and resin film, the boundary being susceptible to oxidation first, and the electrode strip is covered with the resin film on the conductive polymer. Water does not enter between the conductive polymer and the electrode and oxidation is prevented on the electrode, thereby preventing the polymer PTC thermistor from decreasing in performance, which is degraded by oxidation. Further, a corrosion-resistant region is formed in which the conductive polymer and the resin film are overlaid to prevent the entry of water around the electrode. This configuration also prevents oxidation on the electrode and prevents the polymer PTC thermistor from decreasing in performance.

According to an embodiment of the polymer PTC thermistor, the conductive polymer is formed into a plate, electrodes are provided respectively on the two sides of the conductive polymer, and a resin film is formed which covers the two sides so as to wrap the electrodes, so that the electrodes can be readily attached to the conductive polymer and the resin layer covering the electrodes can be readily formed, thereby improving productivity in the manufacturing of the polymer PTC thermistor.

According to the polymer PCT thermistor of the present invention, two electrodes are separately provided on one side of the conductive polymer and a resin film is formed which covers the side so as to wrap the two electrodes, so that the electrodes can be readily attached to the conductive polymer and the resin film covering the electrodes can be readily formed, thereby improving productivity in the manufacturing of the polymer PTC thermistor.

Moreover, according to the polymer PTC thermistor of the present invention, a temperature can be clearly detected by using the polymer PTC thermistor of the present invention as a temperature sensor element. For example, the polymer PTC thermistor is mounted on the circuit board of each kind of electrical equipment, the polymer PTC thermistor having the conductive polymer whose thermal expansion temperature is set in consideration of an upper limit temperature permitting normal operations of the circuit board. Thus, the circuit is interrupted in the event of abnormal heat on the board, thereby protecting the electrical equipment.

## Claims

1. A polymer PTC thermistor comprising:
a conductive polymer (1) having PTC characteristics and having a side (1a), and
two electrodes (12a, 13a) joined to the conductive polymer,
**characterised in that** the two electrodes are separately provided on said side (1a) of the conductive polymer and are separated from an edge of the side, and a resin film covers the side so as to wrap the electrodes.

2. A temperature sensor **characterised by** using the polymer PTC thermistor according to claim 1 as a temperature sensor element.

## Patentansprüche

1. Polymer-PTC-Thermistor umfassend:
ein leitfähiges Polymer (1) mit PTC-Charakteristik und mit einer Seite (1a), und
zwei Elektroden (12a, 13a), die mit dem leitfähigen Polymer verbunden sind,
**dadurch gekennzeichnet, dass** die zwei Elektroden getrennt auf der Seite (1a) des leitfähigen Polymers bereitgestellt sind und von einem Rand der Seite getrennt sind, und ein Harzfilm die Seite bedeckt, um die Elektroden zu umhüllen.

2. Temperatursensor, **gekennzeichnet durch** die Verwendung des Polymer-PTC-Thermistors nach Anspruch 1 als ein Temperatursensorelement.

## Revendications

1. Thermistance CTP polymère, comprenant:
un polymère conducteur (1) présentant des caractéristiques CTP et comportant un côté (la), et
deux électrodes (12a, 13a) jointes au polymère conducteur,
**caractérisée en ce que** les deux électrodes sont fournies séparément sur ledit côté (la) du polymère conducteur et sont séparées d'un bord du côté, et un film de résine recouvre le côté de façon à envelopper les électrodes.

2. Capteur de température **caractérisé par** l'utilisation de la thermistance CTP polymère selon la revendication 1 en tant qu'élément de capteur de température.
